Europäisches Patentamt

European Patent Office

Office européen des brevets

(11) Publication number: **0 213 930**
**A2**

## (12) EUROPEAN PATENT APPLICATION

(21) Application number: **86306618.9**

(22) Date of filing: **27.08.86**

(51) Int. Cl.⁴: **B 01 D 27/06**

(30) Priority: **27.08.85 US 769840**

(43) Date of publication of application:
**11.03.87 Bulletin 87/11**

(84) Designated Contracting States:
**DE FR GB IT**

(71) Applicant: **Kennecott Corporation
The Standard Oil Company Headquarters Building 200
Public Square
Cleveland Ohio 44114-2375(US)**

(72) Inventor: **Thomas, Dwight J.
1610 Irongate Circle
Zionsville, IN 46077(US)**

(72) Inventor: **Fall, Ronald E.
4107 Meader Bed
Indianapolis, IN 47268(US)**

(74) Representative: **Lawson, David Glynne
MARKS & CLERK 57-60 Lincoln's Inn Fields
London WC2A 3LS(GB)**

(54) **Method and structure for integral forming of filter cartridge end caps.**

(57) A filter cartridge structure and method of manufacture wherein a cylindrical pleated filter element (14) is disposed about a perforated center tube (11) and wherein thermoplastic end caps (16, 18) are formed integrally to the ends of the filter element and center tube to seal the filter element and tube against leakage and provide a completed filter cartridge structure.

FIG. 1

Croydon Printing Company Ltd.

## METHOD AND STRUCTURE FOR INTEGRAL FORMING OF FILTER CARTRIDGE END CAPS

### Background of the Invention

The present invention is directed to new and useful improvements in filter cartridges and in improved methods for providing integral end caps for such cartridges.

Filter cartridges of the tubular type which are disposable after a selected period of use are well known. These cartridges usually comprise a cylindrical shaped filter media through which a filtrate is discharged to a perforated center tube with nonfiltered particles retained by the surface of the filter media. These tubular filter elements or media may comprise wound rovings or various porous sheet materials arranged in pleated or other desired configuration about the center tube.

The opposite ends of the cartridge are enclosed by end caps which are preformed from metal or plastic material and attached by a variety of means to the ends of the filter element. The end caps are usually provided with peripheral wall portions or rims which embrace the ends of the element and at least one of the end caps is provided with a suitable opening for permitting the discharge of filtrate from the center tube.

In the manufacture of these filter cartridges the forming and application of the end cap to the filter element usually requires a series of manufacturing steps and many prior art patents disclose end cap structures and methods for forming the same. The latter are typified by the devices and methods disclosed in the following U.S. Patent Nos: 2,941,620; 3,013,667; 4,392,958 and 4,512,892.

In these patents end caps for filter cartridges are disclosed which for example comprise preformed thermoplastic or metal devices which are either fused or otherwise adhered to the opposite ends of the filter cartridge. Alternatively non-porous films or gaskets are attached to the ends of the filter element prior to the mounting of the end cap thereon for proper sealing of the filter element.

It is an object of the present invention to provide a novel filter cartridge having a novel end cap structure and method for forming such structure.

Another object is to provide end caps for a filter cartridge formed of thermoplastic polymers and which caps are formed integrally with the filter element in a heated open mold.

A still further object is to provide a novel method to seal the ends of a filter element using relatively inexpensive thermoplastic powders rather than injected molded polymer end caps or metal, or polymer end caps and adhesives.

Summary of the Invention

The present invention contemplates a novel filter cartridge and method for forming and applying end caps to the spaced ends of the filter element. In one embodiment the filter element comprises a folded or pleated filter pack of porous filter material. Thermoplastic polymer powders are placed in a heated open mold and upon melting, the resulting liquid polymer is used to seal the end of the pleated filter pack. Upon cooling and solidification the filter pack is removed from the mold. The end cap is formed integrally on the filter cartridge and the process repeated to seal the end cap at the opposite end of the filter pack.

The above and other objects and advantages of the present invention will appear more fully hereinafter from a consideration of the detailed description which follows taken together with the accompanying drawing wherein one embodiment of the present invention is illustrated.

Description of the Drawing

In the Drawing:

FIG. 1 is a partly cross-sectional elevational view of a filter cartridge embodying the novel end cap structure;

FIG. 2 is a sectional view taken on the line 2-2 of FIG. 1;

FIG. 3 is a view of one end of the filter element prior to insertion into the end cap forming mold; and

FIG. 4 is view of a filter element similar to the filter element of FIG. 1 but encased within a semi-rigid outer tube.

Detailed Description

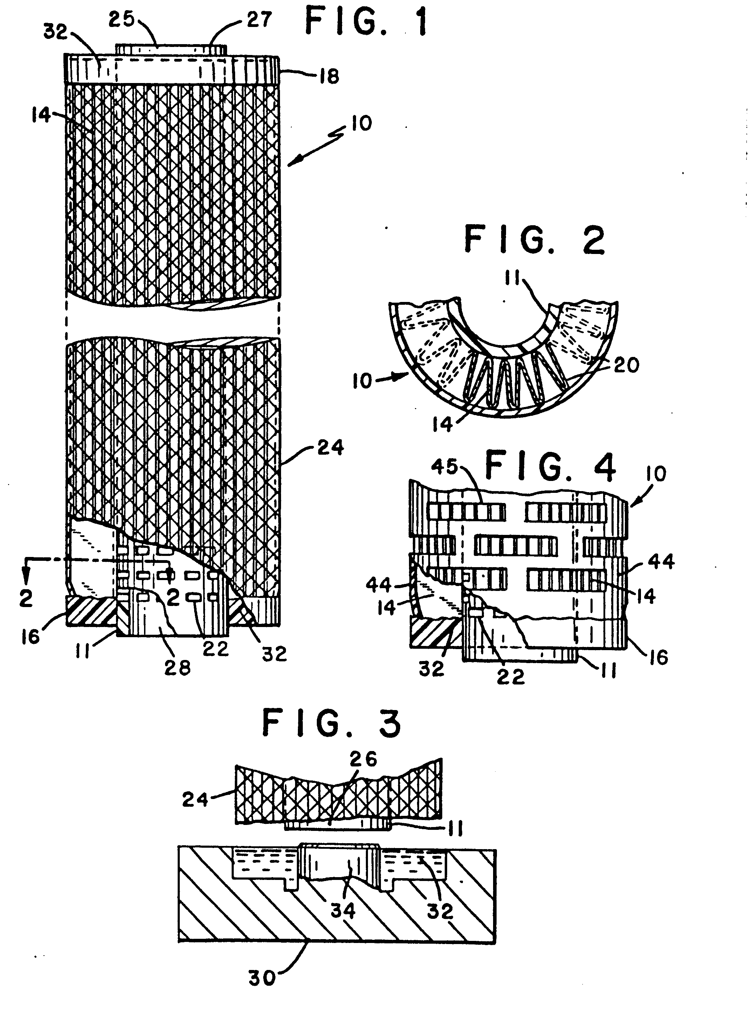

Referring now to the drawings for a more detailed description of the present invention, a filter cartridge incorporating an embodiment thereof is illustrated and generally indicated by the reference numeral 10 in FIG. 1. Element 10 comprises a perforated center tube 11 which is made from a suitable thermoplastic material and is sufficiently rigid to provide a support for a filter element 14 which has opposite ends located in end caps 16 and 18 in a manner to be described in further detail.

Filter element 14 may be formed of any suitable porous filter media and is illustrated (FIG. 2) as comprising a pleated porous paper. If desired filter element 14 may comprise filter media such as roving material wound about center tube 11 in a well known manner to provide diamond shaped filter passageways or other similar material with a melt or degradation temperature equal to or higher than end caps 16-18. It is known that such filters are of high desirability to remove particles or solids from a liquid solid solution.

The pleats 20 of filter element 14 run longitudinally thereof and the inner folds of pleats 20 contact center tube 11 (FIG. 1) at perforations or aperture 22 provided in tube 11. In addition an expanded plastic netting 24 material is wrapped about the outer surface of the element 14 in a known manner to protect element 14. If desired netting 24 may comprise a semi-rigid plastic tube 44 about element 14 as illustrated in FIG. 4. Tube 44 has a plurality of openings 45 in the surface thereof to allow fluid to enter element 14 and adds rigidity to cartridge 10.

As mentioned it is a feature of this invention to provide novel end cap structure for a filter element such as filter element 14. To this end end therefore caps 16 and 18 are integrally formed at each end of element 14 adjacent fluid discharge openings 26-28 of tube 11 respectively. Openings 26 and 28 are adapted to receive therein extending tube elements (not shown) or similar means for mounting cartridge 10 in a suitable filter housing (not shown). In use with cartridge 10 is mounted in the filter housing the fluid to be filtered flows radially inward through element 14 with filtrate passing through perforations 22 into center tube 11 for discharge through outlets 26 and 28 thereof in a well known manner.

As seen with respect to one end cap of filter element 14 in FIG. 3 end cap 16 is formed by placing a thermoplastic polymer powder into a heated open mold 30 of a desired cylindrical configuration. The mold 30 is held at a temperature above the melting point of the polymer such that the viscosity of the melted polymer 32 will allow wetting of the structure of the pleated filter material of element 14 or cause controlled melting of a compatible polymer filter media.

The ends of cylindrical pleated filter element 14 and netting 24 or in the case of the embodiment of FIG. 4 the ends of filter element 14 and tube 44 are first placed into the melted polymer 32 and then removed to a fixture for cooling which causes the polymer to solidify and form complete end cap 16 and simultaneously seal the pleated cylindrical filter element 14 about the periphery of the lower end of center tube 11 which is inserted over a post 34 in mold 30 to prevent blockage of outlet 26. The outer surface of cap 16 of the solidified mass reflecting a mirror image of the open mold 30 from which the element 14 is removed and the process repeated to form end cap 18 and opening 28. In the molding process the lower end of netting 24 or alternatively the bottom of tube 44 are merged integrally into end cap 16 or 18.

In the forming of end caps 16-18 an example of the above mentioned manufacturing steps are as follows:

A.   Open mold 30 is charged with a thermoplastic powder which may comprise any thermoplastic material having a reduced particle size such that the material will flow easily. In one example, the particle size is reduced such that greater than 70% of the particles will pass through a standard 100-mesh screen. The charge size is determined by the volumetric design parameters of desired finished end cap 16 or 18.

B.   Charged mold 30 is then leveled by vibration or pressure consolidation or packing.

C.   Charged mold 30 is then fed into a conveyor tunnel oven.

D.   In a preheat zone of the oven, moisture is driven from the polymer.

In a second section of the oven the temperature of the charged mold is elevated to above the melt temperature of the polymer.

The molten polymer and mold enters a third section of the oven which is used to adjust the viscosity/melt temperature of the polymer. The viscosity/melt temperature is critical and is adjusted to wet the intended filter media of a given porosity and pore diameter, without destroying the filter media or wicking the polymer into the filter media and creating voids in the end capping polymer.

E.   The mold with the molten resin is then fed to a suitable cooling fixture.

F.   The end of cylindrical filter element 14 is then placed into the pool of molten polymer 32 in mold 30.

G. Pressure is applied to the opposite end of the filter element 14 and the molten polymer is allowed to cool and solidify.

H. The mold 30 is then removed from the solidified resin and returned for re-use.

I. The process is repeated for the opposite end cap of filter element 14.

J. Upon completion of the second end cap the manufacture cartridge 10 filter is completed.

EXAMPLE

An example of a filter cartridge made in accordance with the described process steps A to J and associated parameters are as follows:

Filter element 14 Phenolic Resin impregnated cellulosic filter media with pores no smaller than 35 micrometers.

Pleat height: .625 inches.

Filter element 14 length: 9.75 inches

Polypropylene center tube 11, Polypropylene outer sleeve.

Media Surface Area: 6.1 sq. ft.

Polymer: Eastman Tenite 808A Polyethylene

Melt Index: 7.0 gm/10 min.

Density: 0.917 gm/cm 3

Mold Shrinkage: 0.01 - 0.05 inches/inch

Mold For disc-shaped end cap 16 or 18

        2.70 inches outside diameter

        1.10 inches inside diameter face includes gasket recess.

Mold Charge - 26 gms.

Preheat - ambient

Melt Zone - 370°F., 7 min.

Stabilization - 330°F., 7 min.

Cooling - 55°F., 5 min.

As will be appreciated from the foregoing description a novel filter cartridge and method for forming end caps has many advantages in use. Among other advantages the use of the thermoplastic polymer permits the use of inexpensive stamped or machined open molds in various shapes and sizes to obtain void free solid end caps resulting in highly integral connections to the open ends of the pleated filter element. The sealed filter cylinder end caps can be made in such shapes that they can be used to mount the filter element directly to any selected filter housing.

Although one embodiment of the present invention has been illustrated and described in detail it is to be expressly understood that the invention is not limited thereto. Various changes can be made in the design and arrangement of parts without departing from the spirit and scope of the invention as the same will now be understood by those skilled in the art.

M&C FOLIO: 799P52731                    WANGDOC: 0712d

## Claims

1.   A filter cartridge comprising

a.   a cylindrical support tube (11) having a perforated outer wall,

b.   a filter medium (14) disposed about said support tube for filtering fluid to and for discharge from said support tube, and

c.   end caps (16,18) at opposite ends of the filter medium support tube to seal the ends of said filter medium characterised in that the end caps (16,18) are formed integrally to the ends of the support tube (11) and integrally merge the end cap (16,18) to the filter medium (14) and to said outer wall of the support tube (11).

2.   The cartridge of Claim 1 wherein said filter medium comprises an elongated porous sheet material having a plurality of V-shaped pleats (20) extending longitudinally of said support tube and wherein said end caps are provided at the opposite ends of said pleats to fix and seal said pleats in position about said tube.

3.   The cartridge of Claim 1 or 2 wherein said end caps are formed from thermoplastic material.

4.   The cartridge of Claim 1,2 or 3 wherein the ends of said filter medium are integrally embedded in the end cap material.

5. The cartridge of Claim 4 wherein said end caps, support tube and said filter medium are of a selected compatible material wherein said filter medium and said support tube have melting temperatures equal to or higher than the thermoplastic material of said end caps.

6. The cartridge of Claim 4 or 5 wherein a protective netting (24) is wrapped about the outer periphery of said filter medium and has opposite end portions merged into said end caps.

7. The cartridge of Claim 4 or 5 wherein said filter medium is surrounded by a tube member (44) having a plurality of openings to permit fluid to enter said filter medium and wherein said tube has opposite end portions merged into said end caps.

8. A method for forming an end cap (16,18) for the end of a filter element (14) disposed about the periphery of a center support tube (11), characterised by the steps of charging a mould (30) with a thermoplastic polymer material for forming a pool (32) of melted polymer, feeding the charged mould to a conveyor oven where sequentially moisture is driven from the polymer and the mould elevated to a temperature above the melting temperature of the polymer, moving said mould to a cooling fixture and placing one end of the cylindrical filter element (14) into the pool of molten polymer in said mould, applying pressure to the opposite end of the filter element and allowing the polymer to solidify in the mould to seal the ends of said filter element, and then removing said mould from the solidified polymer.

9. The method of Claim 8 wherein said filter element (14) comprises a pleated porous sheet material having a melting temperature equal to or higher than the thermoplastic polymer in said mould.

10. The method of Claim 8 or 9 wherein said filter element is disposed about the support tube enclosed within a protective outer material and including the step of placing the ends of said tube and protective outer material into the molten polymer in the mould with said filter element for solidification therewith.

FIG. 1

FIG. 2

FIG. 4

FIG. 3